# EUROPEAN PATENT APPLICATION

(11) **EP 3 513 699 A1**
(43) Date of publication of application: **24.07.2019**
(21) Application number: 19150291.3
(22) Date of filing: 04.01.2019
(51) Int. Cl.: A47K 1/06, A47J 47/20, B65F 1/00, E03C 1/264, B65F 1/14

(54) **DISPOSABLE SINK MAT WITH INTEGRAL CORD**

(30) Priority: 22.01.2018 DK 201800038
(71) Applicant: Nielsen, Rikke Kronborg Løgstrup, 9800 Hjoerring (DK)
(72) Inventor: Nielsen, Rikke Kronborg Løgstrup, 9800 Hjoerring (DK)
(74) Representative: Sun, Yiming

(57) **Abstract**

The present invention relates to a disposable sink mat with integral cord. The disposable sink mat is configured to accumulate waste during dishwashing or while utilizing sink to prevent clogging in the sink. The disposable sink mat is further configured to provide collection and disposal of waste accumulated in the sink mat in a convenient and sanitary fashion. The disposable sink mat comprises a body portion having at least four corners and exterior edges extending from the body portion, at least one cord element that extends laterally from at least one corner. The cord element is configured to be pulled outwardly by a user for gathering the at least four corners and exterior edges inward to a closed position to form a closed bag.

## Description

### CROSS REFERENCE TO RELATED APPLICATION

The present application claims the benefit of Danish Patent Application No. PA 201800038 filed January 28, 2018, the contents of which is hereby incorporated by reference.

### BACKGROUND OF THE INVENTION

### A. Technical field

The invention disclosed herein generally relates to sink accessories. More particularly, the invention disclosed herein relates to a disposable sink mat with integral cord, which is adapted to act as a waste wrapper bag to provide collection and disposal of waste accumulated in the sink mat in a convenient and sanitary fashion.

### B. Description of related art

During dishwashing process, dishes are dropped into the sink, which could be harmful to dishware, causing chips and breaks. Moreover, pots and pans can be rough on sink surfaces, causing scratches and scrapes. A further problem involved during dishwashing process is disposing of leftover food form the utensils in the garbage, where the user need to scrape the leftover food from the plate on doing the washing process every time to prevent clogging of sink with the food particles. Situation such as washing and trimming of vegetables could also result in accumulation of food into the sink. These waste particles every time need to be removed from the sink to prevent clogging which is generally done by hand. This a messy and uncomfortable process for people.

Hence, sink mats are developed for use with kitchen. Sink mats come in many sizes and utilizes various adapting means to accommodate distinct types of sink. Sink mats are disposed flat into the sink to prevent the above discussed issues. Even though, few products in the market accumulates the waste during washing process, the user need to carry the waste by their hand. Majority of products in the market are composed of non-biodegradable material, which increases the rate of non-biodegradable waste entering in the environment. Most of the mats on the market are intended for repeat use and require consistent thorough cleaning. Even when cleaned properly, there are still chances for bacteria exposure to the sink mat. This would could cause many health problems for the people using the dishes.

A prior art, US2426025 of Justin discloses a sink basket adapted for placing in a kitchen sink. Said sink basket includes a body portion with four corners and exterior hems extending from the body portion. The sink basket also comprises a cord, which extends from at least one corner of the exterior edges. The body portion is made of a cloth material to drain water. However, the sink basket lacks in disclosing an improved configuration and operation of the cord.

Henceforth, it is desirable to provide a disposable sink mat to reduce the potential for contamination. Further, the disposable sink mat also need to act as a waste wrapper bag to provide collection and disposal of waste accumulated in the sink mat in a convenient and sanitary fashion. The disposable sink mat also need to accumulate the wastes during dishwashing process or while utilizing sink to prevent clogging in the sink.

### SUMMARY OF THE INVENTION

The present invention relates to a disposable sink mat with integral cord. The disposable sink mat is configured to provide collection and disposal of waste accumulated in the sink mat in a convenient and sanitary fashion. The disposable sink mat is further configured to act as a protective cover for sink and utensils to prevent marking on its surface. The present invention provides disposable sink mat to reduce the potential for contamination.

The disposable sink mat with the integral cord comprises a body portion, and at least one cord element. The body portion comprises at least four corners and exterior edges extending from the body portion. In an embodiment, the body portion comprises square shaped configuration. In an embodiment, the at least one cord element extends from the at least one corner of the exterior edge portion. The cord element is configured to be pulled outwardly by a user for gathering the at least four corners and exterior edges inwards to a closed position to form a closed bag. In one embodiment, the disposable sink mat is made of compostable material, biodegradable or reusable materials. In some embodiments, the disposable sink mat is made of plastic or organic material.

In another embodiment, during use of the disposable mat, the disposable mat is placed in a sink. In one embodiment, the body portion of the disposable sink mat is made of pre-defined fabric material to drain water. The pre-defined fabric material includes any one or combination of, but not limited to, natural fibers, synthetic fibers, natural threads, or synthetic or plastic threads. The predefined fabric material is configured to form plurality of apertures between the threads or fiber to drain water. In another embodiment, the plurality of apertures are provided for draining water and any waste product from dishware, cookware and dinnerware placed thereon into a drain. The body portion is configured to gather the food trimmings such as potato peelings, pods, etc. removed from food during the preparation thereof, and other garbage or refuse, scraped or washed off the utensils. Then after accumulation of waste particle in the disposable mat, the user could pull the cord element outwardly, which would gather the at least four corners and exterior edges inwards to form a bag of waste. Then the accumulated bag of waste could be disposed easily.

Other objects, features and advantages of the present invention will become apparent from the following detailed description. It should be understood, however, that the detailed description and the specific examples, while indicating specific embodiments of the invention, are given by way of illustration only, since various changes and modifications within the spirit and scope of the invention will become apparent to those skilled in the art from this detailed description.

### BRIEF DESCRIPTION OF DRAWINGS

The foregoing summary, as well as the following detailed description of the invention, is better understood when read in conjunction with the appended drawings. For the purpose of illustrating the invention, exemplary constructions of the invention are shown in the drawings. However, the invention is not limited to the specific methods and structures disclosed herein. The description of a method step or a structure referenced by a numeral in a drawing is applicable to the description of that method step or structure shown by that same numeral in any subsequent drawing herein.
**FIG. 1** exemplarily illustrates a disposable sink mat in an embodiment of the present invention.
**FIG. 2** exemplarily illustrates a perspective view of multiple disposable sink mat as a roll in an embodiment of the present invention.

### DETAILED DESCRIPTION OF EMBODIMENTS

A description of embodiments of the present invention will now be given with reference to the Figures. It is expected that the present invention may be embodied in other specific forms without departing from its spirit or essential characteristics. The described embodiments are to be considered in all respects only as illustrative and not restrictive.

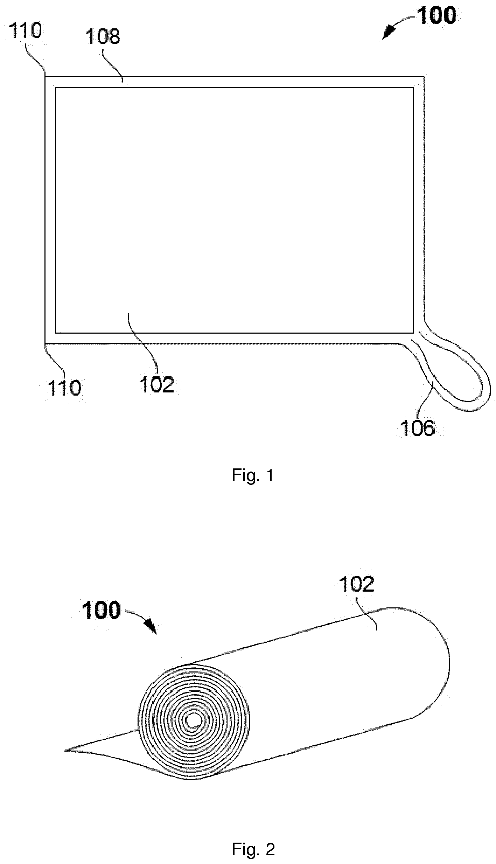

Referring to **FIG. 1**, the present invention relates to a disposable sink mat **100** with integral cord. The present invention provides the disposable sink mat **100** to reduce the potential for contamination. The disposable sink mat **100** is configured to accumulate waste during dishwashing process or while utilizing sink to prevent clogging in the sink. The disposable sink mat **100** is further configured to provide collection and disposal of waste accumulated in the disposable sink mat **100** in a convenient and sanitary fashion. The disposable sink mat **100** is further configured to act as a protective cover for sink and utensils to prevent marking on its surface.

The disposable sink mat **100** with the integral cord comprises a body portion **102**, and at least one cord element **106**. The body portion **102** comprises at least four corners **110** and exterior edges **108** extending from the body portion **102**. In another embodiment, the body portion **102** comprises a square shaped configuration. The body portion **102** is configured to fit in the sink. In another embodiment, the body portion **102** could be rectangular or have some other configuration.

In one embodiment, the disposable sink mat **100** is made of compostable material or other materials. In some embodiments, the disposable sink mat **100** is made of plastic or organic material. In one embodiment, the body portion **102** of the disposable sink mat **100** is made of pre-defined fabric material to drain water. The pre-defined fabric material includes any one or combination of, but not limited to, natural fibers, synthetic fibers, natural threads, or synthetic or plastic threads. The predefined fabric material is configured to form plurality of apertures between the threads or fiber to drain water. In another embodiment, the plurality of apertures are provided for draining water and any waste product from dishware, cookware and dinnerware placed thereon into a drain. In an embodiment, the at least one cord element **106** extends from the at least one corner **110** of the exterior edges **108**. The cord element **106** is configured to be pulled outwardly by a user for gathering the at least four corners **110** and exterior edges **108** inward to a closed position to form a closed bag.

In another embodiment, during use of the disposable sink mat **100**, the disposable mat **100** is placed in a sink. The body portion **102** is configured to gather the food trimmings such as such as potato peelings, pods, etc. removed from food during the preparation thereof, and other garbage or refuse, scraped or washed off the utensils. Then after, accumulation of waste particle in the disposable sink mat **100**, the user could pull the cord element **106** outwardly, which would gather the edges **108** of the mat **100** to form a bag of waste. Then the accumulated waste in the disposable sink mat **100** of bag type configuration could be disposed easily. Thus, the disposable sink mat **100** of the present invention provides collection and disposal of waste accumulated in the disposable sink mat **100** in a convenient and sanitary fashion.

Referring to **FIG. 2**, multiple disposable sink mat **100** could be delivered to the consumer in a rolled form, which provides a merchantable appearance to the disposable mat **100**. Advantageously, the present invention enables to prevent marking on the surface of the utensil or sink. The disposable sink mat **100** helps in accumulating waste during dishwashing process or while utilizing sink to prevent clogging in the sink. Further, the present invention, provides collection and disposal of waste accumulated in the disposable sink mat **100**. According to the present invention, the disposable sink mat **100** enables the user to dispose waste from the sink mat **100** in a convenient and sanitary fashion. Further, the present invention provided disposable sink mat **100** to reduce the potential for contamination.

Preferred embodiments of this invention are described herein, including the best mode known to the inventors for carrying out the invention. It should be understood that the illustrated embodiments are exemplary only, and should not be taken as limiting the scope of the invention.

The foregoing description comprise illustrative embodiments of the present invention. Having thus described exemplary embodiments of the present invention, it should be noted by those skilled in the art that the within disclosures are exemplary only, and that various other alternatives, adaptations, and modifications may be made within the scope of the present invention. Merely listing or numbering the steps of a method in a certain order does not constitute any limitation on the order of the steps of that method. Many modifications and other embodiments of the invention will come to mind to one skilled in the art to which this invention pertains having the benefit of the teachings presented in the foregoing descriptions. Although specific terms may be employed herein, they are used only in generic and descriptive sense and not for purposes of limitation. Accordingly, the present invention is not limited to the specific embodiments illustrated herein.

## Claims

1. A disposable sink mat suitable for being incorporated on a sink for waste collection, comprising:
a body portion made of pre-defined fabric material to drain water, having at least four corners and exterior edges extending from the body portion, and at least one cord element extending laterally from at least one corner of the exterior edges, wherein the at least one cord element is configured to be pulled outwardly for gathering at least four corners and exterior edges of the body portion inward to a closed position to form a closed bag.

2. The disposable sink mat of claim 1, **characterized by** said body portion having a square configuration.

3. The disposable sink mat of claim 1, **characterized by** said body portion having a rectangular configuration.

4. The disposable sink mat of claim 1, **characterized by** being made of compostable material.

5. The disposable sink mat of claim 1, **characterized by** being made of plastic material.

6. The disposable sink mat of claim 1, **characterized by** being made of organic material.

7. The disposable sink mat of claim 1, **characterized by** the body portion being sized to fit in the sink.
